# EUROPÄISCHE PATENTSCHRIFT

(11) **EP 2 230 288 B1**
(45) Veröffentlichungstag und Bekanntmachung des Hinweises auf die Patenterteilung: **25.05.2016**
(21) Anmeldenummer: 10156703.0
(22) Anmeldetag: 17.03.2010
(51) Int. Cl.: C09K 5/04, F25B 17/08

(54) **METALLORGANISCHE GERÜSTMATERIALIEN IN KÄLTE/WÄRMEMASCHINEN**
METAL-ORGANIC FRAMEWORKS IN REFRIGERATION/HEATING MACHINES
MATÉRIAUX À STRUCTURE ORGANOMÉTALLIQUE POUR DES MACHINES À FROID OU À CHALEUR

(30) Priorität: 20.03.2009 EP 09155677
(43) Veröffentlichungstag der Anmeldung: 22.09.2010
(73) Patentinhaber: BASF SE, 67056 Ludwigshafen am Rhein (DE)
(72) Erfinder: Kiener, Christoph, 67256, Weisenheim am Sand (DE); Müller, Ulrich, 67435, Neustadt (DE); Schubert, Markus, 67071, Ludwigshafen (DE); Teich, Friedhelm, 68535, Neckarhausen (DE); Herr Henninger, Stefan, Dr., 79346 Endingen (DE); Herr Henning, Hans-Martin, Prof. Dr., 79100 Freiburg (DE)
(74) Vertreter: BASF IP Association

(56) Entgegenhaltungen:
- EP-A1- 1 652 817
- EP-A1- 1 840 486
- WO-A2-2008/129051
- WO-A2-2010/047820
- DE-A1-102006 011 410
- DE-A1-102006 061 587
- US-A1- 2003 222 023

## Beschreibung

Die vorliegende Erfindung betrifft Adsorptions-Kälte/Wärmemodule, sowie deren Einsatz in Kälte- und/oder Wärmemaschinen, Flüssigkeitsbehältern oder Raumklimasystemen sowie deren Verwendung.

Adsorptions-Kälte/Wärmemodule können Teil einer Kälte/Wärmemaschine sein oder bereits eine solche darstellen. Diesen liegt das Prinzip zugrunde, dass aufgrund von Adsorptions- und Desorptionsvorgängen Wärmeenergie freigesetzt oder entzogen wird, so dass diese zum Kühlen und/oder Erwärmen eingesetzt werden können.

Je nach Verwendungszweck kann das Kühlen oder das Erwärmen das Hauptaugenmerk darstellen. Demzufolge werden solche Adsorptions-Kälte/Wärmemodule auch als (Adsorptions-)Kältemaschinen, (Adsorptions-)Wärmepumpen, Wärmeaustausch-, Heiz-und Kühlspeichersysteme oder als Teil selbstkühlender Behälter im Stand der Technik bezeichnet.

Ein Adsorptionshitzeaustauschermodul wird beispielsweise in EP-A 1 840 486 beschrieben, das eine feuchtigkeitsabsorbierende Schicht aus einem organischen Polymer aufweist.

Die Verwendung von Zeolithen in einem Heiz- und Kühlspeichersystem wird in EP-A 1 652 817 beschrieben. DE-A 10 2006 059 504 beschreibt eine Wärmepumpe mit stapelbar angeordneten Elementen. EP-A 0 412 161 beschreibt eine kryogene Adsorptionskältemaschine sowie Verfahren zur Kühlung eines Objekts mit Hilfe dieser Kältemaschine. Ebenfalls in EP-A 0 840 077 wird eine Adsorptionskältemaschine beschrieben.

Eine Adsorptionswärmepumpe wird in EP-B 1 279 908 beschrieben. Behälter in Form einer Flasche oder Verpackung mit einem selbstkühlenden Modul sind in EP-A 1 647 786 und US-B 7,213,401 beschrieben.

Spezielle Zeolithe in einer Sorptionsvorrichtung zum Heizen und Kühlen von Gasströmen sind in DE-A 100 28 030 beschrieben. Als Adsorptionsmaschine wird ein solches Adsorptions-Kälte/Wärmemodul in DE-A 10 2006 011 410 beschrieben.

Trotz der zahlreich im Stand der Technik bekannten Adsorptions-Kälte/Wärmemodule besteht ein Bedarf an alternativen Modulen beziehungsweise alternativen Adsorptionsmitteln.

Eine Aufgabe der vorliegenden Erfindung liegt somit in der Bereitstellung solcher Module.

Die Aufgabe wird gelöst durch ein Adsorptions-Kälte/Wärmemodul enthaltend ein festes Sorptionsmittel sowie ein Arbeitsmittel, wobei das Sorptionsmittel mindestens ein poröses metallorganisches Gerüstmaterial enthaltend mindestens eine an mindestens ein Metallion koordinativ gebundene, mindestens zweizähnige organische Verbindung enthält, dadurch gekennzeichnet, dass das Arbeitsmittel Wasser enthält.

Es hat sich gezeigt, dass aufgrund der Verwendung von metallorganischem Gerüstmaterials in solchen Adsorptions-Kälte/Wärmemodulen vorteilhafte Eigenschaften zum Erwärmen beziehungsweise Kühlen erreicht werden können. Hierbei seien beispielhaft das Adsorptions- und/oder Desorptionsverhalten, insbesondere bei Verwendung von Wasser, zu nennen.

Adsorptions-Kälte/Wärmemodule gemäß der vorliegenden Erfindung können in vielfältigster Weise ausgeführt sein, wobei die konkrete Ausgestaltung von der Anwendung abhängig ist. In jedem Fall wird jedoch das Erwärmen beziehungsweise das Abkühlen durch den Adsorptions- beziehungsweise Desorptionsprozess eines Arbeitsmittels an das beziehungsweise von dem Sorptionsmittel verursacht.

Je nach Anwendungsgebiet kann das geeignete Arbeitsmittel gewählt werden. Erfindungsgemäß enthält das Arbeitsmittel Wasser oder Wasser stellt das Arbeitsmittel dar.

Metallorganische Gerüstmaterialien (MOF) sind im Stand der Technik bekannt und werden beispielsweise beschrieben in US 5,648,508, EP-A-0 790 253, M. O'Keeffe et al., J. Sol. State Chem., 152 (2000), Seite 3 bis 20, H. Li et al., Nature 402, (1999), Seite 276, M. Eddaoudi et al., Topics in Catalysis 9, (1999), Seite 105 bis 111, B. Chen et al., Science 291, (2001), Seite 1021 bis 1023, DE-A-101 11 230, DE-A 10 2005 053430, WO-A 2007/054581, WO-A 2005/049892 und WO-A 2007/023134.

In DE 10 2006 061 587 A1 wird die Verwendung von metallorganischen Gerüstmaterialien als Sorbens sowie zur permanenten farblichen Kennzeichnung eines Filters beschrieben.

US 2003/0222023 A1 bezieht sich auf Formkörper, welche poröse metallorganische Gerüstmaterialien sowie gegebenenfalls weitere Substanzen, insbesondere Trägermaterialien enthalten.

Aluminium-, Eisen- und Chrom-basierte metallorganische Gerüstmaterialien, welche eine von einer Dicarbonsäure abgeleitete organische Verbindung enthalten, sind in WO 2008/129051 A2 beschrieben.

Als eine spezielle Gruppe dieser metallorganischen Gerüstmaterialien werden in der jüngsten Literatur so genannte "beschränkte" Gerüstmaterialien beschrieben, bei denen das Gerüst durch spezielle Wahl der organischen Verbindung sich nicht unendlich sondern unter Ausbildung von Polyedern erstreckt. A.C. Sudik, et al., J. Am. Chem. Soc. 127 (2005), 7110-7118, beschreiben solche speziellen Gerüstmaterialien. Hierbei werden diese zur Abgrenzung als metallorganische Polyeder (MOP = Metal-Organic Polyhedra) bezeichnet.

Eine weitere spezielle Gruppe von porösen metallorganischen Gerüstmaterialien sind solche, bei denen die organische Verbindung als Ligand ein mono-, bi- oder polycyclisches Ringsystem darstellt, das sich zumindest von einem der Heterocyclen ausgewählt aus der Gruppe bestehend aus Pyrrol, alpha-Pyridon und gamma-Pyridon ableitet und mindestens zwei Stickstoff-Ringatome aufweist. Die elektrochemische Herstellung solcher Gerüstmaterialien ist in WO-A 2007/131955 beschrieben.

Die generelle Eignung metallorganischer Gerüstmaterialien zur Aufnahme von Gasen und Flüssigkeiten ist beispielsweise in WO-A 2005/003622 und EP-A 1 702 925 beschrieben.

Insbesondere diese speziellen Gruppen sind im Rahmen der vorliegenden Erfindung geeignet.

Die metallorganischen Gerüstmaterialien gemäß der vorliegenden Erfindung enthalten Poren, insbesondere Mikro- und/oder Mesoporen. Mikroporen sind definiert als solche mit einem Durchmesser von 2 nm oder kleiner und Mesoporen sind definiert durch einen Durchmesser im Bereich von 2 bis 50 nm, jeweils entsprechend nach der Definition, wie sie Pure & Applied Chem. 57 (1983), 603 - 619, insbesondere auf Seite 606 angegeben ist. Die Anwesenheit von Mikro- und/oder Mesoporen kann mit Hilfe von Sorptionsmessungen überprüft werden, wobei diese Messungen die Aufnahmekapazität der MOF für Stickstoff bei 77 Kelvin gemäß DIN 66131 und/oder DIN 66134 bestimmt.

Vorzugsweise beträgt die spezifische Oberfläche - berechnet nach dem Langmuir-Modell (DIN 66131, 66134) für ein MOF in Pulverform mehr als 100 m²/g, mehr bevorzugt über 300 m²/g, mehr bevorzugt mehr als 700 m²/g, weiter mehr bevorzugt mehr als 800 m²/g, weiter mehr bevorzugt mehr als 1000 m²/g und besonders bevorzugt mehr als 1200 m²/g.

Formkörper enthaltend metallorganische Gerüstmaterialien können eine niedrigere spezifische Oberfläche besitzen; vorzugsweise jedoch mehr als 150 m²/g, mehr bevorzugt mehr als 300 m²/g, weiter mehr bevorzugt mehr als 700 m²/g.

Die Metallkomponente im Gerüstmaterial nach der vorliegenden Erfindung ist vorzugsweise ausgewählt aus den Gruppen la, IIa, IIIa, IVa bis VIIIa und Ib bis Vlb. Besonders bevorzugt sind Mg, Ca, Sr, Ba, Sc, Y, Ln, Ti, Zr, Hf, V, Nb, Ta, Cr, Mo, W, Mn, Re, Fe, Ro, Os, Co, Rh, Ir, Ni, Pd, Pt, Cu, Ag, Au, Zn, Cd, Hg, Al, Ga, In, Tl, Si, Ge, Sn, Pb, As, Sb und Bi, wobei Ln für Lanthanide steht.

Lanthanide sind La, Ce, Pr, Nd, Pm, Sm, En, Gd, Tb, Dy, Ho, Er, Tm, Yb.

In Bezug auf die Ionen dieser Elemente sind besonders zu erwähnen Mg²⁺, Ca²⁺, Sr^{2*}, Ba²⁺, Sc³⁺, Y³⁺, Ln³⁺, Ti⁴⁺, Zr⁴⁺, Hf⁴⁺, V⁴⁺, V³⁺, V²⁺, Nb³⁺, Ta³⁺, Cr³⁺, Mo³⁺, W³⁺, Mn³⁺, Mn²⁺, Re³⁺, Re²⁺, Fe³⁺, Fe²⁺, Ru³⁺, Ru²⁺, Os³⁺, Os²⁺, Co³⁺, Co²⁺, Rh²⁺, Rh⁺, Ir²', Ir⁺, Ni²⁺, Ni⁺, Pd²⁺, Pd⁺, Pt²⁺, Pt⁺, Cu²⁺, Cu⁺, Ag⁺, Au⁺, Zn²⁺, Cd²⁺, Hg²⁺, Al³⁺, Ga³⁺, In³⁺, TI³⁺, Si⁴⁺, Si²⁺ , Ge⁴⁺, Ge²⁺, Sn⁴⁺, Sn²⁺, Pb⁴⁺, Pb²⁺, As⁵⁺, As³⁺, As⁺, Sb⁵⁺, Sb³⁺, Sb⁺, Bi⁵⁺, Bi³⁺ und Bi⁺.

Weiterhin besonders bevorzugt sind Mg, Al, Y, Sc, Zr, Ti, V, Cr, Mo, Mn, Fe, Co, Cu, Ni, Zn, Ln. Weiter bevorzugt sind Al, Mo, Mn, Y, Sc, Mg, Fe, Cu und Zn. Insbesondere sind Y, Sc, Al, Mn, Cu und Zn bevorzugt.

Der Begriff "mindestens zweizähnige organische Verbindung" bezeichnet eine organische Verbindung, die mindestens eine funktionelle Gruppe enthält, die in der Lage ist, zu einem gegebenen Metallion mindestens zwei koordinative Bindungen, und/oder zu zwei oder mehr, bevorzugt zwei Metallatomen jeweils eine koordinative Bindung auszubilden.

Als funktionelle Gruppen, über die die genannten koordinativen Bindungen ausgebildet werden kann, sind insbesondere beispielsweise folgende funktionellen Gruppen zu nennen: -CO₂H, -CS₂H, -NO₂, -B(OH)₂, -SO₃H, -Si(OH)₃, -Ge(OH)₃, -Sn(OH)₃, -Si(SH)₄, -Ge(SH)₄, -Sn(SH)₃, -PO₃H, -AsO₃H, -AsO₄H, -P(SH)₃, -As(SH)₃, -CH(RSH)₂, -C(RSH)₃ -CH(RNH₂)₂ -C(RNH₂)₃, -CH(ROH)₂, -C(ROH)₃, -CH(RCN)₂, -C(RCN)₃ wobei R beispielsweise bevorzugt eine Alkylengruppe mit 1, 2, 3, 4 oder 5 Kohlenstoffatomen wie beispielsweise eine Methylen-, Ethylen-, n-Propylen-, i-Propylen, n-Butylen-, i-Bu-tylen-, tert-Butylen- oder n-Pentylengruppe, oder eine Arylgruppe, enthaltend 1 oder 2 aromatische Kerne wie beispielsweise 2 C₆-Ringe, die gegebenenfalls kondensiert sein können und unabhängig voneinander mit mindestes jeweils einem Substituenten geeignet substituiert sein können, und/oder die unabhängig voneinander jeweils mindestens ein Heteroatom wie beispielsweise N, O und/oder S enthalten können. Gemäß ebenfalls bevorzugten Ausführungsformen sind funktionelle Gruppen zu nennen, bei denen der oben genannte Rest R nicht vorhanden ist. Diesbezüglich sind unter anderem -CH(SH)₂, -C(SH)₃, -CH(NH₂)₂, -C(NH₂)₃, -CH(OH)₂, -C(OH)₃, -CH(CN)₂ oder -C(CN)₃ zu nennen.

Die funktionellen Gruppen können jedoch auch Heteroatome eines Heterocyclus sein. Insbesondere sind hierbei Stickstoffatome zu nennen.

Die mindestens zwei funktionellen Gruppen können grundsätzlich an jede geeignete organische Verbindung gebunden sein, solange gewährleistet ist, dass die diese funktionellen Gruppen aufweisende organische Verbindung zur Ausbildung der koordinativen Bindung und zur Herstellung des Gerüstmaterials befähigt ist.

Bevorzugt leiten sich die organischen Verbindungen, die die mindestens zwei funktionellen Gruppen enthalten, von einer gesättigten oder ungesättigten aliphatischen Verbindung oder einer aromatischen Verbindung oder einer sowohl aliphatischen als auch aromatischen Verbindung ab.

Die aliphatische Verbindung oder der aliphatische Teil der sowohl aliphatischen als auch aromatischen Verbindung kann linear und/oder verzweigt und/oder cyclisch sein, wobei auch mehrere Cyclen pro Verbindung möglich sind. Weiter bevorzugt enthält die aliphatische Verbindung oder der aliphatische Teil der sowohl aliphatischen als auch aromatischen Verbindung 1 bis 15, weiter bevorzugt 1 bis 14, weiter bevorzugt 1 bis 13, weiter bevorzugt 1 bis 12, weiter bevorzugt 1 bis 11 und insbesondere bevorzugt 1 bis 10 C-Atome wie beispielsweise 1, 2, 3, 4, 5, 6, 7, 8, 9 oder 10 C-Atome. Insbesondere bevorzugt sind hierbei unter anderem Methan, Adamantan, Acetylen, Ethylen oder Butadien.

Die aromatische Verbindung oder der aromatische Teil der sowohl aromatischen als auch aliphatischen Verbindung kann einen oder auch mehrere Kerne wie beispielsweise zwei, drei, vier oder fünf Kerne aufweisen, wobei die Kerne getrennt voneinander und/oder mindestens zwei Kerne in kondensierter Form vorliegen können. Besonders bevorzugt weist die aromatische Verbindung oder der aromatische Teil der sowohl aliphatischen als auch aromatischen Verbindung einen, zwei oder drei Kerne auf, wobei einer oder zwei Kerne besonders bevorzugt sind. Unabhängig voneinander kann weiter jeder Kern der genannten Verbindung mindestens ein Heteroatom wie beispielsweise N, O, S, B, P, Si, Al, bevorzugt N, O und/oder S enthalten. Weiter bevorzugt enthält die aromatische Verbindung oder der aromatische Teil der sowohl aromatischen als auch aliphatischen Verbindung einen oder zwei C₆-Kerne, wobei die zwei entweder getrennt voneinander oder in kondensierter Form vorliegen. Insbesondere sind als aromatische Verbindungen Benzol, Naphthalin und/oder Biphenyl und/oder Bipyridyl und/oder Pyridyl zu nennen.

Mehr bevorzugt ist die mindestens zweizähnige organische Verbindung, ein aliphatischer oder aromatischer, acyclischer oder cyclischer Kohlenwasserstoff mit 1 bis 18, vorzugsweise 1 bis 10 und insbesondere 6 Kohlenstoffatomen, der zudem ausschließlich 2, 3 oder 4 Carboxylgruppen als funktionelle Gruppen aufweist.

Beispielsweise leitet sich die mindestens zweizähnige organische Verbindung von einer Dicarbonsäure ab, wie etwa Oxalsäure, Bernsteinsäure, Weinsäure, 1,4-Butandicarbonsäure, 1,4-Butendicarbonsäure, 4-Oxo-Pyran-2,6-dicarbonsäure, 1,6-Hexandicarbonsäure, Decandicarbonsäure, 1,8-Heptadecandicarbonsäure, 1,9-Heptadecandicarbonsäure, Heptadecandicarbonsäure, Acetylendicarbonsäure, 1,2-Benzoldicarbonsäure, 1,3-Benzoldicarbonsäure, 2,3-Pyridindicarbonsäure, Pyridin-2,3-dicarbonsäure, 1,3-Butadien-1,4-dicarbonsäure, 1,4-Benzoldicarbonsäure, p-Benzoldicarbonsäure, Imidazol-2,4-dicarbonsäure, 2-Methylchinolin-3,4-dicarbonsäure, Chinolin-2,4-dicarbonsäure, Chinoxalin-2,3-dicarbonsäure, 6-Chlorchinoxalin-2,3-dicarbonsäure, 4,4'-Diaminphenylmethan-3,3'-dicarbonsäure, Chinolin-3,4-dicarbonsäure, 7-Chlor-4-hydroxychinolin-2,8-dicarbonsäure, Diimiddicarbonsäure, Pyridin-2,6-dicarbonsäure, 2-Methylimidazol-4,5-dicarbonsäure, Thiophen-3,4-dicarbonsäure, 2-Isopropylimidazol-4,5-dicarbonsäure, Tetrahydropyran-4,4-dicarbonsäure, Perylen-3,9-dicarbonsäure, Perylendicarbonsäure, Pluriol E 200-dicarbonsäure, 3,6-Dioxaoctandicarbonsäure, 3,5-Cyclohexadien-1,2-dicarbonsäure, Octadicarbonsäure, Pentan-3,3-carbonsäure, 4,4'-Diamino-1,1'-diphenyl-3,3'-dicarbonsäure, 4,4'-Diaminodiphenyl-3,3'-dicarbonsäure, Benzidin-3,3'-dicarbonsäure, 1,4-Bis-(phenylamino)-benzol-2,5-dicarbonsäure, 1,1 '-Di-naphthyldicarbonsäure, 7-Chlor-8-methylchinolin-2,3-dicarbonsäure, 1-Anilinoanthra-chinon-2,4'-dicarbonsäure, Polytetrahydrofuran-250-dicarbonsäure, 1,4-Bis-(carboxy-methyl)-piperazin-2,3-dicarbonsäure, 7-Chlorchinolin-3,8-dicarbonsäure, 1-(4-Carboxy)-phenyl-3-(4-chlor)-phenylpyrazolin-4,5-dicarbonsäure, 1,4,5,6,7,7,-Hexachlor-5-norbornen-2,3-dicarbonsäure, Phenylindandicarbonsäure, 1,3-Dibenzyl-2-oxo-imidazolidin-4,5-dicarbonsäure, 1,4-Cyclohexandicarbonsäure, Naphthalin-1,8-dicarbonsäure, 2-Benzoylbenzol-1,3-dicarbonsäure, 1,3-Dibenzyl-2-oxoimidazolidin-4,5-cisdicarbonsäure, 2,2'-Bichinolin-4,4'-dicarbonsäure, Pyridin-3,4-dicarbonsäure, 3,6,9-Trioxaundecandicarbonsäure, Hydroxybenzophenondicarbonsäure, Pluriol E 300-dicarbonsäure, Pluriol E 400-dicarbonsäure, Pluriol E 600-dicarbonsäure, Pyrazol-3,4-dicarbonsäure, 2,3-Pyrazindicarbonsäure, 5,6-Dimethyl-2,3-pyrazindicarbonsäure, 4,4'-Diaminodiphenyletherdümiddicarbonsäure, 4,4'-Diaminodiphenylmethandümiddicarbonsäure, 4,4'-Diaminodiphenylsulfondümiddicarbonsäure, 1,4-Naphthalindicarbonsäure, 2,6-Naphthalindicarbonsäure, 1,3-Adamantandicarbonsäure, 1,8-Naphthalindicarbonsäure, 2,3-Naphthalindicarbonsäure, 8-Methoxy-2,3-naphthalindicarbonsäure, 8-Nitro-2,3-naphthalincarbonsäure, 8-Sulfo-2,3-naphthalindicarbonsäure, Anthracen-2,3-dicarbonsäure, 2',3'-Diphenyl-p-terphenyl-4,4"-dicarbonsäure, Diphenylether-4,4'-dicarbonsäure, Imidazol-4,5-dicarbonsäure, 4(1H)-Oxothiochromen-2,8-dicarbonsäure, 5-tert-Butyl-1,3-benzoldicarbonsäure, 7,8-Chinolindicarbonsäure, 4,5-Imidazoldicarbonsäure, 4-Cyclohexen-1,2-dicarbonsäure, Hexatriacontandicarbonsäure, Tetradecandicarbonsäure, 1,7-Heptadicarbonsäure, 5-Hydroxy-1,3-Benzoldicarbonsäure, 2,5-Dihydroxy-1,4-dicarbonsäure, Pyrazin-2,3-dicarbonsäure, Furan-2,5-dicarbonsäure, 1Nonen-6,9-dicarbonsäure, Eicosendicarbonsäure, 4,4'-Dihydroxydiphenylmethan-3,3'-dicarbonsäure, 1-Amino-4-methyl-9,10-dioxo-9,10-dihydroanthracen-2,3-dicarbonsäure, 2,5-Pyridindicarbonsäure, Cyclohexen-2,3-dicarbonsäure,2,9-Dichlorfluorubin-4,11-dicarbonsäure, 7-Chlor-3-methylchinolin-6,8-dicarbonsäure, 2,4-Dichlorbenzo-phenon-2',5'-dicarbonsäure, 1,3-Benzoldicarbonsäure, 2,6-Pyridindicarbonsäure, 1-Methylpyrrol-3,4-dicarbonsäure, 1-Benzyl-1H-pyrrol-3,4-dicarbonsäure, Anthrachinon-1,5-dicarbonsäure, 3,5-Pyrazoldicarbonsäure, 2-Nitrobenzol-1,4-dicarbonsäure, Hep-tan-1,7-dicarbonsäure, Cyclobutan-1,1-dicarbonsäure 1,14-Tetradecandicarbonsäure, 5,6-Dehydronorbornan-2,3-dicarbonsäure, 5-Ethyl-2,3-pyridindicarbonsäure oder Campherdicarbonsäure,

Weiterhin mehr bevorzugt handelt es sich bei der mindestens zweizähnigen organischen Verbindung um eine der oben beispielhaft genannten Dicarbonsäure als solche.

Beispielsweise kann sich die mindestens zweizähnige organische Verbindung von einer Tricarbonsäure ableiten, wie etwa

2-Hydroxy-1,2,3-propantricarbonsäure, 7-Chlor-2,3,8-chinolintricarbonsäure, 1,2,3-, 1,2,4-Benzoltricarbonsäure, 1,2,4-Butantricarbonsäure, 2-Phosphono-1,2,4-butantricarbonsäure, 1,3,5-Benzoltricarbonsäure, 1-Hydroxy-1,2,3-Propantricarbonsäure, 4,5-Dihydro-4,5-dioxo-1 H-pyrrolo[2,3-F]chinolin-2,7,9-tricarbonsäure, 5-Acetyl-3-amino-6-methylbenzol-1,2,4-tricarbonsäure, 3-Amino-5-benzoyl-6-methylbenzol-1,2,4-tricarbonsäure, 1,2,3-Propantricarbonsäure oder Aurintricarbonsäure,

Weiterhin mehr bevorzugt ist die mindestens zweizähnige organische Verbindung einer der oben beispielhaft genannten Tricarbonsäuren als solche.

Beispiele für eine mindestens zweizähnige organische Verbindung, die sich von einer Tetracarbonsäure ableitet, sind

1,1-Dioxidperylo[1,12-BCD]thiophen-3,4,9,10-tetracarbonsäure, Perylentetracarbonsäuren wie Perylen-3,4,9,10-tetracarbonsäure oder Perylen-1,12-sulfon-3,4,9,10-tetracarbonsäure, Butantetracarbonsäuren wie 1,2,3,4-Butantetracarbonsäure oder Meso-1,2,3,4-Butantetracarbonsäure, Decan-2,4,6,8-tetracarbonsäure, 1,4,7,10,13,16-Hexaoxacyclooctadecan-2,3,11,12-tetracarbonsäure, 1,2,4,5-Benzoltetracarbonsäure, 1,2,11,12-Dodecantetracarbonsäure, 1,2,5,6-Hexan-tetracarbonsäure, 1,2,7,8-Octantetracarbonsäure, 1,4,5,8-Naphthalintetracarbonsäure, 1,2,9,10-Decantetracarbonsäure, Benzophenontetracarbonsäure, 3,3',4,4'-Benzo-phenontetracarbonsäure, Tetrahydrofurantetracarbonsäure oder Cyclopentantetracarbonsäuren wie Cyclopentan-1,2,3,4-tetracarbonsäure.

Weiterhin mehr bevorzugt handelt es sich bei der mindestens zweizähnigen organischen Verbindung um eine der oben beispielhaft genannten Tetracarbonsäuren als solche.

Bevorzugte Heterocyclen als mindestens zweizähnige organische Verbindungen, bei denen eine koordinative Bindung über die Ringheteroatome erfolgt, sind die folgenden substituierten oder unsubstituierten Ringsysteme:

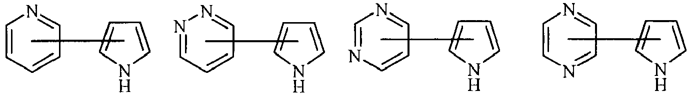

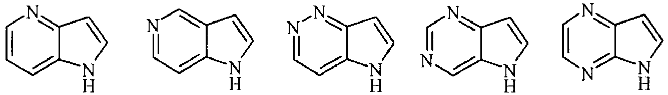

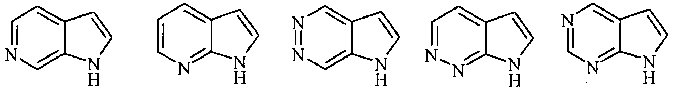

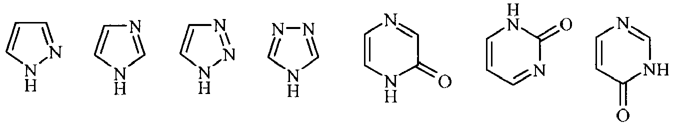

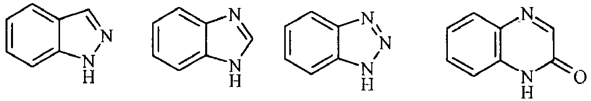

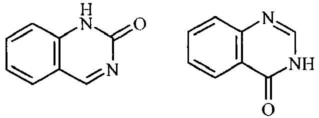

Ganz besonders bevorzugt werden gegebenenfalls mindestens einfach substituierte mono-, di-, tri-, tetra- oder höherkernige aromatische Di-, Tri- oder Tetracarbonsäuren eingesetzt, wobei jeder der Kerne mindestens ein Heteroatom enthalten kann, wobei zwei oder mehr Kerne gleiche oder unterschiedliche Heteroatome enthalten kann. Beispielsweise bevorzugt werden monokernige Dicarbonsäuren, monokernige Tricarbonsäuren, monokernige Tetracarbonsäuren, dikernige Dicarbonsäuren, dikernige Tricarbonsäuren, dikernige Tetracarbonsäuren, trikernige Dicarbonsäuren, trikernige Tricarbonsäuren, trikernige Tetracarbonsäuren, tetrakernige Dicarbonsäuren, tetrakernige Tricarbonsäuren und/oder tetrakernige Tetracarbonsäuren. Geeignete Heteroatome sind beispielsweise N, O, S, B, P bevorzugte Heteroatome sind hierbei N, S und/oder O. Als geeigneter Substituent ist diesbezüglich unter anderem -OH, eine Nitrogruppe, eine Aminogruppe oder eine Alkyl- oder Alkoxygruppe zu nennen.

Insbesondere bevorzugt werden als mindestens zweizähnige organische Verbindungen Imidazolate, wie 2-Methylimidazolat, Acetylendicarbonsäure (ADC), Campherdicarbonsäure, Fumarsäure, Bernsteinsäure, Benzoldicarbonsäuren wie Phthalsäure, Isophthalsäure, Terephthalsäure (BDC), Aminoterephthaläure, Triethylendiamin (TE-DA), Naphthalindicarbonsäuren (NDC), Biphenyldicarbonsäuren wie beispielsweise 4,4'-Biphenyldicarbonsäure (BPDC), Pyrazindicarbonsäuren, w i e 2,5-Pyrazindicarbonsäure, Bipyridindicarbonsäuren wie beispielsweise 2,2'-Bipyridindicarbonsäuren wie beispielsweise 2,2'-Bipyridin-5,5'-dicarbonsäure, Benzoltricarbonsäuren wie beispielsweise 1,2,3-, 1,2,4-Benzoltricarbonsäure oder 1,3,5-Benzoltricarbonsäure (BTC), Benzoltetracarbonsäure, Adamantantetracarbonsäure (ATC), Adamantandibenzoat (ADB) Benzoltribenzoat (BTB), Methantetrabenzoat (MTB), Adamantantetrabenzoat oder Dihydroxyterephthalsäuren wie beispielsweise 2,5-Dihydroxyterephthalsäure (DHBDC), Tetrahydropyren-2,7-dicarbonsäure (HPDC), Biphenyltetracarbonsäure (BPTC), 1,3-Bis(4-pyridyl)propan (BPP), Pyridindicarbonsäure, Imidazoldicarbonsäure eingesetzt.

Ganz besonders bevorzugt werden unter anderem 2-Methylimidazol, 2-Ethylimidazol, Phthalsäure, Isophthalsäure, Terephthalsäure, 2,6-Naphthalindicarbonsäure, 1,4-Naphthalindicarbonsäure, 1,5-Naphthalindicarbonsäure, 1,2,3-Benzoltricarbonsäure, 1,2,4-Benzoltricarbonsäure, 1,3,5-Benzoltricarbonsäure, 1,2,4,5-Benzoltetracarbonsäure, AminoBDC, TEDA, Fumarsäure, Biphenyldicarboxylat, 1,5- und 2,6-Naphthalindicarbonsäure, tert.-Butylisophthalsäure, Dihydroxybenzoesäure, BTB, HPDC, BPTC, BPP, Pyridindicarbonsäure, Imidazoldicarbonsäure.

Neben diesen mindestens zweizähnigen organischen Verbindungen kann das metallorganische Gerüstmaterial auch einen oder mehrere einzähnige Liganden und/oder einen oder mehrere mindestens zweizähnige Liganden, die sich nicht von einer Di-, Tri- oder Tetracarbonsäure ableiten, umfassen. Als zweizähnige Liganden dienen auch Ameisensäure und Essigsäure.

In einer bevorzugten Ausführungsform leitet sich daher die mindestens eine mindestens zweizähnige organische Verbindung von Ameisensäure, Essigsäure oder einer Di-, Tri- oder Tetracarbonsäure ab.

Der Begriff "ableiten" bedeutet im Rahmen der vorliegenden Erfindung, dass die mindestens eine mindestens zweizähnige organische Verbindung in teilweise oder vollständig deprotonierter Form vorliegt. Weiterhin bedeutet der Begriff "ableiten", dass die mindestens eine mindestens zweizähnige organische Verbindung weitere Substituenten aufweisen kann. So kann eine Di-, Tri-, oder Tetracarbonsäure neben der Carbonsäurefunktionalität auch einen oder unabhängig voneinander mehrere Substituenten, wie Amino-, Hydroxyl, Methoxy, Halogen oder Methylgruppen, aufweisen. Vorzugsweise liegt kein weiterer Substituent vor. Im Rahmen der vorliegenden Erfindung bedeutet der Begriff "ableiten" auch, dass die Carbonsäurefunktionalität als Schwefelanalogon vorliegen kann. Schwefelanaloga sind -C(=O)SH sowie deren Tautomer und -C(S)SH.

Neben diesen mindestens zweizähnigen organischen Verbindungen kann das metallorganische Gerüstmaterial auch eine oder mehrere einzähnige Liganden umfassen.

Geeignete Lösemittel zur Herstellung des metallorganischen Gerüstmaterials sind u.a. Ethanol, Dimethylformamid, Toluol, Methanol, Chlorbenzol, Diethylformamid, Dimethylsulfoxid, Wasser, Wasserstoffperoxid, Methylamin, Natronlauge, N-Methylpolidonether, Acetonitril, Benzyl-chlorid, Triethylamin, Ethylenglykol und Gemische hiervon. Weitere Metallionen, mindestens zweizähnige organische Verbindungen und Lösemittel für die Herstellung von MOF sind u.a. in US-A 5,648,508 oder DE-A 101 11 230 beschrieben.

Die Porengröße des metallorganischen Gerüstmaterials kann durch Wahl des geeigneten Liganden und/oder der mindestens zweizähnigen organischen Verbindung gesteuert werden. Allgemein gilt, dass je größer die organische Verbindung desto größer die Porengröße ist. Vorzugsweise beträgt die Porengröße von 0,2 nm bis 30 nm, besonders bevorzugt liegt die Porengröße im Bereich von 0,3 nm bis 3 nm bezogen auf das kristalline Material.

In einem Formkörper enthaltend ein metallorganisches Gerüstmaterial treten jedoch auch größere Poren auf, deren Größenverteilung variieren kann. Vorzugsweise wird jedoch mehr als 50 % des gesamten Porenvolumens, insbesondere mehr als 75 %, von Poren mit einem Porendurchmesser von bis zu 1000 nm gebildet. Vorzugsweise wird jedoch ein Großteil des Porenvolumens von Poren aus zwei Durchmesserbereichen gebildet. Es ist daher weiter bevorzugt, wenn mehr als 25 % des gesamten Porenvolumens, insbesondere mehr als 50 % des gesamten Porenvolumens von Poren gebildet wird, die in einem Durchmesserbereich von 100 nm bis 800 nm liegen und wenn mehr als 15 % des gesamten Porenvolumens, insbesondere mehr als 25 % des gesamten Porenvolumens von Poren gebildet wird, die in einem Durchmesserbereich oder bis zu 10 nm liegen. Die Porenverteilung kann mittels Quecksilber-Porosimetrie bestimmt werden.

Nachfolgend sind Beispiele für metallorganische Gerüstmaterialien angegeben. Neben der Kennzeichnung des Gerüstmaterials, dem Metall sowie dem mindestens zweizähnigen Liganden ist weiterhin das Lösemittel sowie die Zellenparameter (Winkel α, β und γ sowie die Abstände A, B und C in Å) angegeben. Letztere wurden durch Röntgenbeugung bestimmt.

| **MOF-n** | **Inhaltsstoffe molares Verhältnis M+L** | **Solvens s** | **α** | **β** | **γ** | **a** | **b** | **c** | **Raumgruppe** |
|---|---|---|---|---|---|---|---|---|---|
| MOF-0 | Zn(NO₃)₂·6H₂O H₃(BTC) | Ethanol | 90 | 90 | 120 | 16.711 | 16.711 | 14.189 | P6(3)/ Mcm |
| MOF-2 | Zn(NO₃)₂·6H₂O (0.246 mmol) H₂(BDC) 0.241 mmol) | DMF Toluen | 90 | 102.8 | 90 | 6.718 | 15.49 | 12.43 | P2(1)/n |
| MOF-3 | Zn(NO₃)₂·6H₂O (1.89 mmol) H₂(BDC) (1.93mmol) | DMF MeOH | 99.72 | 111.11 | 108.4 | 9.726 | 9.911 | 10.45 | P-1 |
| MOF-4 | Zn(NO₃)₂·6H₂O (1.00 mmol) H₃(BTC) (0.5 mmol) | Ethanol | 90 | 90 | 90 | 14.728 | 14.728 | 14.728 | P2(1)3 |
| MOF-5 | Zn(NO₃)₂·6H₂O (2.22 mmol) H₂(BDC) (2.17 mmol) | DMF Chlorbenzen | 90 | 90 | 90 | 25.669 | 25.669 | 25.669 | Fm-3m |
| MOF-38 | Zn(NO₃)₂·6H₂O (0.27 mmol) H₃(BTC) (0.15 mmol) | DMF Chlorbenzen | 90 | 90 | 90 | 20.657 | 20.657 | 17.84 | 14cm |
| MOF-31 Zn(ADC)₂ | Zn(NO₃)₂·6H₂O 0.4 mmol H₂(ADC) 0.8 mmol | Ethanol | 90 | 90 | 90 | 10.821 | 10.821 | 10.821 | Pn(-3)m |
| MOF-12 Zn₂(ATC) | Zn(NO₃)₂·6H₂O 0.3 mmol H₄(ATC) 0.15 mmol | Ethanol | 90 | 90 | 90 | 15.745 | 16.907 | 18.167 | Pbca |
| MOF-20 ZnNDC | Zn(NO₃)₂·6H₂O 0.37 mmol H₂NDC 0.36 mmol | DMF Chlorbenzen | 90 | 92.13 | 90 | 8.13 | 16.444 | 12.807 | P2(1)/c |
| MOF-37 | Zn(NO₃)₂·6H₂O 0.2 mmol H₂NDC 0.2 mmol | DEF Chlorbenzen | 72.38 | 83.16 | 84.33 | 9.952 | 11.576 | 15.556 | P-1 |
| MOF-8 Tb₂ (ADC) | Tb(NO₃)₃·5H₂O 0.10 mmol H₂ADC 0.20 mmol | DMSO MeOH | 90 | 115.7 | 90 | 19.83 | 9.822 | 19.183 | C2/c |
| MOF-9 Tb₂(ADC) | Tb(NO₃)₃·5H₂O 0.08 mmol H₂ADB 0.12 mmol | DMSO | 90 | 102.09 | 90 | 27.056 | 16.795 | 28.139 | C2/c |
| MOF-6 | Tb(NO₃)₃·5H₂O 0.30 mmol H₂ (BDC) 0.30 mmol | DMF MeOH | 90 | 91.28 | 90 | 17.599 | 19.996 | 10.545 | P21/c |
| MOF-7 | Tb(NO₃)₃·5H₂O 0.15 mmol H₂(BDC) 0.15 mmol | H₂O | 102.3 | 91.12 | 101.5 | 6.142 | 10.069 | 10.096 | P-1 |
| MOF-69A | Zn(NO₃)₂·6H₂O 0.083 mmol 4,4'BPDC 0.041 mmol | DEF H₂O₂ MeNH₂ | 90 | 111.6 | 90 | 23.12 | 20.92 | 12 | C2/c |
| MOF-69B | Zn(NO₃)₂·6H₂O 0.083 mmol 2,6-NCD 0.041 mmol | DEF H₂O₂ MeNH₂ | 90 | 95.3 | 90 | 20.17 | 18.55 | 12.16 | C2/c |
| MOF-11 Cu₂(ATC) | Cu(NO₃)₂·2.5H₂O 0.47 mmol H₂ATC 0.22 mmol | H₂O | 90 | 93.86 | 90 | 12.987 | 11.22 | 11.336 | C2/c |
| MOF-11 Cu₂(ATC) dehydr. | | | 90 | 90 | 90 | 8.4671 | 8.4671 | 14.44 | P42/ mmc |
| MOF-14 Cu₃ (BTB) | Cu(NO₃)₂·2.5H₂O 0.28 mmol H₃BTB 0.052 mmol | H₂O DMF EtOH | 90 | 90 | 90 | 26.946 | 26.946 | 26.946 | Im-3 |
| MOF-32 Cd (ATC) | Cd(NO₃)₂·4H₂O 0.24 mmol H₄ATC 0.10 mmol | H₂O NaOH | 90 | 90 | 90 | 13.468 | 13.468 | 13.468 | P(-4)3m |
| MOF-33 Zn₂ (ATB) | ZnCl₂ 0.15 mmol h₄ATB 0.02 mmol | H₂O DMF EtOH | 90 | 90 | 90 | 19.561 | 15.255 | 23.404 | Imma |
| MOF-34 Ni(ATC) | Ni(NO₃)₂·6H₂O 0.24 mmol H₄ATC 0.10 mmol | H₂O NaOH | 90 | 90 | 90 | 10.066 | 11.163 | 19.201 | P2₁2₁2₁ |
| MOF-36 Zn₂ (MTB) | Zn(NO₃)₂·4H₂O 0.20 mmol H₄MTB 0.04 mmol | H₂O DMF | 90 | 90 | 90 | 15.745 | 16.907 | 18.167 | Pbca |
| MOF-39 Zn₃O(HBTB) | Zn(NO₃)₂4H₂O 0.27 mmol H₃BTB 0.07 mmol | H₂O DMF EtOH | 90 | 90 | 90 | 17.158 | 21.591 | 25.308 | Pnma |
| NO305 | FeCl₂·4H₂O 5.03 mmol Ameisensre. 86.90 mmol | DMF | 90 | 90 | 120 | 8.2692 | 8.2692 | 63.566 | R-3c |
| NO306A | FeCl₂·4H₂O 5.03 mmol Ameisensre. 86.90 mmol | DEF | 90 | 90 | 90 | 9.9364 | 18.374 | 18.374 | Pbcn |
| N029 MOF-0 ähnlich | Mn(Ac)₂·4H₂O 0.46 mmol H₃BTC 0.69 mmol | DMF | 120 | 90 | 90 | 14.16 | 33.521 | 33.521 | P-1 |
| BPR48 A2 | Zn(NO₃)₂ 6H₂O 0.012 mmol H₂BDC 0.012 mmol | DMSO Toluen | 90 | 90 | 90 | 14.5 | 17.04 | 18.02 | Pbca |
| BPR69 B1 | Cd(NO₃)₂ 4H₂O 0.0212 mmol H₂BDC 0.0428 mmol | DMSO | 90 | 98.76 | 90 | 14.16 | 15.72 | 17.66 | Cc |
| BPR92 A2 | Co(NO₃)₂·6H₂O 0.018 mmol H₂BDC 0.018 mmol | NMP | 106.3 | 107.63 | 107.2 | 7.5308 | 10.942 | 11.025 | P1 |
| BPR95 C5 | Cd(NO₃)₂4H₂O 0.012 mmol H₂BDC 0.36 mmol | NMP | 90 | 112.8 | 90 | 14.460 | 11.085 | 15.829 | P2(1)/n |
| Cu C₆H₄O₆ | Cu(NO₃)₂·5H₂O 0.370 mmol H₂BDC(OH)₂ 0.37 mmol | DMF Chlorbenzen | 90 | 105.29 | 90 | 15.259 | 14.816 | 14.13 | P2(1)/c |
| M(BTC) MOF-0 ähnlich | Co(SO₄) H₂O 0.055 mmol H₃BTC 0.037 mmol | DMF | wie MOF-0 | | | | | | |
| Tb(C₆H₄O₆) | Tb(NO₃)₃·5H₂O 0.370 mmol H₂(C₆H₄O₆) 0.56 mmol | DMF Chlorbenzen | 104.6 | 107.9 | 97.147 | 10.491 | 10.981 | 12.541 | P-1 |
| Zn (C₂O₄) | ZnCl₂ 0.370 mmol Oxalsäure 0.37 mmol | DMF Chlorbenzen | 90 | 120 | 90 | 9.4168 | 9.4168 | 8.464 | P(-3)1m |
| Co(CHO) | Co(NO₃)₂·5H₂O 0.043 mmol Ameisensre. 1.60 mmol | DMF | 90 | 91.32 | 90 | 11.328 | 10.049 | 14.854 | P2(1)/n |
| Cd(CHO) | Cd(NO₃)₂·4H₂O 0.185 mmol formic acid 0.185 mmol | DMF | 90 | 120 | 90 | 8.5168 | 8.5168 | 22.674 | R-3c |
| CU(C₃H₂O₄) | Cu(NO₃)₂·2.5H₂O 0.043 mmol Malonsre. 0.192 mmol | DMF | 90 | 90 | 90 | 8.366 | 8.366 | 11.919 | P43 |
| Zn₆(NDC)₅ MOF-48 | Zn(NO₃)₂·6H₂O 0.097 mmol 14 NDC 0.069 mmol | DMF Chlorbenzen H₂O₂ | 90 | 95.902 | 90 | 19.504 | 16.482 | 14.64 | C2/m |
| MOF-47 | Zn(NO₃)₂ 6H₂O 0.185 mmol H₂(BDC[CH₃]₄) 0.185 mmol | DMF Chlorbenzen H₂O₂ | 90 | 92.55 | 90 | 11.303 | 16.029 | 17.535 | P2(1)/c |
| MO25 | Cu(NO₃)₂·2.5H₂O 0.084 mmol BPhDC 0.085 mmol | DMF | 90 | 112.0 | 90 | 23.880 | 16.834 | 18.389 | P2(1)/c |
| Cu-Thio | Cu(NO₃)₂·2.5H₂O 0.084 mmol Thiophen Dicarbonsre. 0.085 mmol | DEF | 90 | 113.6 | 90 | 15.474 7 | 14.514 | 14.032 | P2(1)/c |
| CIBDC1 | Cu(NO₃)₂·2.5H₂O0. 084 mmol H₂(BDCCl₂) 0.085 mmol | DMF | 90 | 105.6 | 90 | 14.911 | 15.622 | 18.413 | C2/c |
| MOF-101 | Cu(NO₃)₂·2.5H₂O 0.084 mmol BrBDC 0.085 mmol | DMF | 90 | 90 | 90 | 21.607 | 20.607 | 20.073 | Fm3m |
| Zn₃(BTC)₂ | ZnCl₂ 0.033 mmol H₃BTC 0.033 mmol | DMF EtOH Base zugegeben | 90 | 90 | 90 | 26.572 | 26.572 | 26.572 | Fm-3m |
| MOF-j | Co(CH₃CO₂)₂·4H₂ O (1.65 mmol) H₃(BZC) (0.95 mmol) | H₂O | 90 | 112.0 | 90 | 17.482 | 12.963 | 6.559 | C2 |
| MOF-n | Zn(NO₃)₂·6H₂OH₃ (BTC) | Ethanol | 90 | 90 | 120 | 16.711 | 16.711 | 14.189 | P6(3)/mcm |
| PbBDC | Pb(NO₃)₂ (0.181 mmol) H₂(BDC) (0.181 mmol) | DMF Ethanol | 90 | 102.7 | 90 | 8.3639 | 17.991 | 9.9617 | P2(1)/n |
| Znhex | Zn(NO₃)₂·6H₂O (0.171 mmol) H₃BTB (0.114 mmol) | DMF p-Xylen Ethanol | 90 | 90 | 120 | 37.116 5 | 37.117 | 30.019 | P3(1)c |
| AS16 | FeBr₂ 0.927 mmol H₂(BDC) 0.927 mmol | DMF anhydr. | 90 | 90.13 | 90 | 7.2595 | 8.7894 | 19.484 | P2(1)c |
| AS27-2 | FeBr₂ 0.927 mmol H₃(BDC) 0.464 mmol | DMF anhydr. | 90 | 90 | 90 | 26.735 | 26.735 | 26.735 | Fm3m |
| AS32 | FeCl₃ 1.23 mmol H₂(BDC) 1.23 mmol | DMF anhydr. Ethanol | 90 | 90 | 120 | 12.535 | 12.535 | 18.479 | P6(2)c |
| AS54-3 | FeBr₂ 0.927 BPDC 0.927 mmol | DMF anhydr. n-Propanol | 90 | 109.98 | 90 | 12.019 | 15.286 | 14.399 | C2 |
| AS61-4 | FeBr₂ 0.927 mmol m-BDC 0.927 mmol | Pyridin anhydr. | 90 | 90 | 120 | 13.017 | 13.017 | 14.896 | P6(2)c |
| AS68-7 | FeBr₂ 0.927 mmol m-BDC 1.204 mmol | DMF anhydr. Pyrid in | 90 | 90 | 90 | 18.340 7 | 10.036 | 18.039 | Pca2₁ |
| Zn(ADC) | Zn(NO₃)₂·6H₂O 0.37 mmol H₂(ADC) 0.36 mmol | DMF Chlorbenzen | 90 | 99.85 | 90 | 16.764 | 9.349 | 9.635 | C2/c |
| MOF-12 Zn₂ (ATC) | Zn(NO₃)₂·6H₂O 0.30 mmol H₄(ATC) 0.15 mmol | Ethanol | 90 | 90 | 90 | 15.745 | 16.907 | 18.167 | Pbca |
| MOF-20 ZnNDC | Zn(NO₃)₂·6H₂O 0.37 mmol H₂NDC 0.36 mmol | DMF Chlorbenzen | 90 | 92.13 | 90 | 8.13 | 16.444 | 12.807 | P2(1)/c |
| MOF-37 | Zn(NO₃)₂·6H₂O 0.20 mmol H₂NDC 0.20 mmol | DEF Chlorbenzen | 72.38 | 83.16 | 84.33 | 9.952 | 11.576 | 15.556 | P-1 |
| Zn(NDC) (DMSO) | Zn(NO₃)₂·6H₂O H₂NDC | DMSO | 68.08 | 75.33 | 88.31 | 8.631 | 10.207 | 13.114 | P-1 |
| Zn(NDC) | Zn(NO₃)₂·6H₂O H₂NDC | | 90 | 99.2 | 90 | 19.289 | 17.628 | 15.052 | C2/c |
| Zn(HPDC) | Zn(NO₃)₂·4H₂O 0.23 mmol H₂(HPDC) 0.05 mmol | DMF H₂O | 107.9 | 105.06 | 94.4 | 8.326 | 12.085 | 13.767 | P-1 |
| Co(HPDC) | Co(NO₃)₂·6H₂O 0.21 mmol H₂ (HPDC) 0.06 mmol | DMF H₂O/ Ethanol | 90 | 97.69 | 90 | 29.677 | 9.63 | 7.981 | C2/c |
| Zn₃(PDC)2.5 | Zn(NO₃)₂·4H₂O 0.17 mmol H₂(HPDC) 0.05 mmol | DMF/ CIBz H₂O/ TEA | 79.34 | 80.8 | 85.83 | 8.564 | 14.046 | 26.428 | P-1 |
| Cd₂ (TPDC)2 | Cd(NO₃)₂·4H₂O 0.06 mmol H₂(HPDC) 0.06 mmol | Methanol/ CHP H₂O | 70.59 | 72.75 | 87.14 | 10.102 | 14.412 | 14.964 | P-1 |
| Tb(PDC)1.5 | Tb(NO₃)₃·5H₂O 0.21 mmol H₂(PDC) 0.034 mmol | DMF H₂O/ Ethanol | 109.8 | 103.61 | 100.14 | 9.829 | 12.11 | 14.628 | P-1 |
| ZnDBP | Zn(NO₃)₂·6H₂O 0.05 mmol Dibenzylphosphat 0.10 mmol | MeOH | 90 | 93.67 | 90 | 9.254 | 10.762 | 27.93 | P2/n |
| Zn₃(BPDC) | ZnBr₂ 0.021 mmol 4,4'BPDC 0.005 mmol | DMF | 90 | 102.76 | 90 | 11.49 | 14.79 | 19.18 | P21/n |
| CdBDC | Cd(NO₃)₂·4H₂O 0.100 mmol H₂(BDC) 0.401 mmol | DMF Na₂SiO ₃ (aq) | 90 | 95.85 | 90 | 11.2 | 11.11 | 16.71 | P21/n |
| Cd-mBDC | Cd(NO₃)₂·4H₂O 0.009 mmol H₂(mBDC) 0.018 mmol | DMF MeNH₂ | 90 | 101.1 | 90 | 13.69 | 18.25 | 14.91 | C2/c |
| Zn₄OBND C | Zn(NO₃)₂·6H₂O 0.041 mmol BNDC | DEF MeNH₂ H₂O₂ | 90 | 90 | 90 | 22.35 | 26.05 | 59.56 | Fmmm |
| Eu(TCA) | Eu(NO₃)₃·6H₂O 0.14 mmol TCA 0.026 mmol | DMF Chlorbenzen | 90 | 90 | 90 | 23.325 | 23.325 | 23.325 | Pm-3n |
| Tb(TCA) | Tb(NO₃)₃·6H₂O 0.069 mmol TCA 0.026 mmol | DMF Chlorbenzen | 90 | 90 | 90 | 23.272 | 23.272 | 23.372 | Pm-3n |
| Formate | Ce(NO₃)₃·6H₂O 0.138 mmol Ameisensre. 0.43 mmol | H₂O Ethanol | 90 | 90 | 120 | 10.668 | 10.667 | 4.107 | R-3m |
| | FeCl_{2·}4H₂O 5.03 mmol Ameisensre. 86.90 mmol | DMF | 90 | 90 | 120 | 8.2692 | 8.2692 | 63.566 | R-3c |
| | FeCl₂·4H₂O 5.03 mmol Ameisensre. 86.90 mmol | DEF | 90 | 90 | 90 | 9.9364 | 18.374 | 18.374 | Pbcn |
| | FeCl_{2·}4H₂O 5.03 mmol 86.90 mmol | Ameisensre. DEF | 90 | 90 | 90 | 8.335 | 8.335 | 13.34 | P-31c |
| NO330 | FeCl₂·4H₂O 0.50 mmol Ameisensre. 8.69 mmol | Formamid | 90 | 90 | 90 | 8.7749 | 11.655 | 8.3297 | Pnna |
| NO332 | FeCl₂·4H₂O 0.50 mmol Ameisensre. 8.69 mmol | DIP | 90 | 90 | 90 | 10.031 3 | 18.808 | 18.355 | Pbcn |
| NO333 | FeCl₂·4H₂O 0.50 mmol Ameisensre. 8.69 mmol | DBF | 90 | 90 | 90 | 45.275 4 | 23.861 | 12.441 | Cmcm |
| NO335 | FeCl₂·4H₂O 0.50 mmol Ameisensre. 8.69 mmol | CHF | 90 | 91.372 | 90 | 11.596 4 | 10.187 | 14.945 | P21/n |
| NO336 | FeCl₂·4H₂O 0.50 mmol Ameisensre. 8.69 mmol | MFA | 90 | 90 | 90 | 11.794 5 | 48.843 | 8.4136 | Pbcm |
| NO13 | Mn(Ac)₂·4H₂O 0.46 mmol Benzoesre. 0.92 mmol Bipyridin 0.46 mmol | Ethanol | 90 | 90 | 90 | 18.66 | 11.762 | 9.418 | Pbcn |
| NO29 MOF-0 ähnlich | Mn(Ac)₂·4H₂O 0.46 mmol H₃BTC 0.69 mmol | DMF | 120 | 90 | 90 | 14.16 | 33.521 | 33.521 | P-1 |
| Mn(hfac)₂ (O₂CC₆H₅) | Mn(Ac)₂·4H₂O 0.46 mmol Hfac 0.92 mmol Bipyridin 0.46 mmol | Ether | 90 | 95.32 | 90 | 9.572 | 17.162 | 14.041 | C2/c |
| BPR43G2 | Zn(NO₃)₂·6H₂O 0.0288 mmol H₂BDC 0.0072 mmol | DMF CH₃CN | 90 | 91.37 | 90 | 17.96 | 6.38 | 7.19 | C2/c |
| BPR48A2 | Zn(NO₃)₂6H₂O 0.012 mmol H₂BDC 0.012 mmol | DMSO Toluen | 90 | 90 | 90 | 14.5 | 17.04 | 18.02 | Pbca |
| BPR49B1 | Zn(NO₃)₂6H₂O 0.024 mmol H₂BDC 0.048 mmol | DMSO Methanol | 90 | 91.172 | 90 | 33.181 | 9.824 | 17.884 | C2/c |
| BPR56E1 | Zn(NO₃)₂6H₂O 0.012 mmol H₂BDC 0.024 mmol | DMSO n-Propanol | 90 | 90.096 | 90 | 14.587 3 | 14.153 | 17.183 | P2(1)/n |
| BPR68D10 | Zn(NO₃)₂ 6H₂O 0.0016 mmol H₃BTC 0.0064 mmol | DMSO Benzen | 90 | 95.316 | 90 | 10.062 7 | 10.17 | 16.413 | P2(1)/c |
| BPR69B1 | Cd(NO₃)₂ 4H₂O 0.0212 mmol H₂BDC 0.0428 mmol | DMSO | 90 | 98.76 | 90 | 14.16 | 15.72 | 17.66 | Cc |
| BPR73E4 | Cd(NO₃)₂ 4H₂O 0.006 mmol H₂BDC 0.003 mmol | DMSO Toluen | 90 | 92.324 | 90 | 8.7231 | 7.0568 | 18.438 | P2(1)/n |
| BPR76D5 | Zn(NO₃)₂6H₂O 0.0009 mmol H₂BzPDC 0.0036 mmol | DMSO | 90 | 104.17 | 90 | 14.419 1 | 6.2599 | 7.0611 | Pc |
| BPR80B5 | Cd(NO₃)₂·4H₂O 0.018 mmol H₂BDC 0.036 mmol | DMF | 90 | 115.11 | 90 | 28.049 | 9.184 | 17.837 | C2/c |
| BPR80H5 | Cd(NO₃)₂ 4H₂O 0.027 mmol H₂BDC 0.027 mmol | DMF | 90 | 119.06 | 90 | 11.474 6 | 6.2151 | 17.268 | P2/c |
| BPR82C6 | Cd(NO₃)₂ 4H₂O 0.0068 mmol H₂BDC 0.202 mmol | DMF | 90 | 90 | 90 | 9.7721 | 21.142 | 27.77 | Fdd2 |
| BPR86C3 | Co(NO₃)₂ 6H₂O 0.0025 mmol H₂BDC 0.075 mmol | DMF | 90 | 90 | 90 | 18.344 9 | 10.031 | 17.983 | Pca2(1) |
| BPR86H6 | Cd(NO₃)₂·6H₂O 0.010 mmol H₂BDC 0.010 mmol | DMF | 80.98 | 89.69 | 83.41 2 | 9.8752 | 10.263 | 15.362 | P-1 |
| | Co(NO₃)₂6H₂O | NMP | 106.3 | 107.63 | 107.2 | 7.5308 | 10.942 | 11.025 | P1 |
| BPR95A2 | Zn(NO₃)₂6H₂O 0.012 mmol H₂BDC 0.012 mmol | NMP | 90 | 102.9 | 90 | 7.4502 | 13.767 | 12.713 | P2(1)/c |
| CUC₆F₄O₄ | Cu(NO₃)₂·2.5H₂O 0.370 mmol H₂BDC(OH)₂ 0.37 mmol | DMF Chlorbenzen | 90 | 98.834 | 90 | 10.967 5 | 24.43 | 22.553 | P2(1)/n |
| Fe Formic | FeCl₂·4H₂O 0.370 mmol Ameisensre. 0.37 mmol | DMF | 90 | 91.543 | 90 | 11.495 | 9.963 | 14.48 | P2(1)/n |
| Mg Formic | Mg(NO₃)₂·6H₂O 0.370 mmol Ameisensre. 0.37 mmol | DMF | 90 | 91.359 | 90 | 11.383 | 9.932 | 14.656 | P2(1)/n |
| MgC₆H₄O₆ | Mg(NO₃)₂·6H₂O 0.370 mmol H₂BDC(OH)₂ 0.37 mmol | DMF | 90 | 96.624 | 90 | 17.245 | 9.943 | 9.273 | C2/c |
| Zn C₂H₄BDC MOF-38 | ZnCl₂ 0.44 mmol CBBDC 0.261 mmol | DMF | 90 | 94.714 | 90 | 7.3386 | 16.834 | 12.52 | P2(1)/n |
| MOF-49 | ZnCl₂ 0.44 mmol m-BDC 0.261 mmol | DMF CH₃CN | 90 | 93.459 | 90 | 13.509 | 11.984 | 27.039 | P2/c |
| MOF-26 | Cu(NO₃)₂·5H₂O 0.084 mmol DCPE 0.085 mmol | DMF | 90 | 95.607 | 90 | 20.879 7 | 16.017 | 26.176 | P2(1)/n |
| MOF-112 | Cu(NO₃)₂·2.5H₂O 0.084 mmol o-Br-m-BDC 0.085 mmol | DMF Ethanol | 90 | 107.49 | 90 | 29.324 1 | 21.297 | 18.069 | C2/c |
| MOF-109 | Cu(NO₃)₂·2.5H₂O 0.084 mmol KDB 0.085 mmol | DMF | 90 | 111.98 | 90 | 23.880 1 | 16.834 | 18.389 | P2(1)/c |
| MOF-111 | Cu(NO₃)₂·2.5H₂O 0.084 mmol o-BrBDC 0.085 mmol | DMF Ethanol | 90 | 102.16 | 90 | 10.676 7 | 18.781 | 21.052 | C2/c |
| MOF-110 | Cu(NO₃)₂·2.5H₂O 0.084 mmol Thiophen Dicarbonsre. 0.085 mmol | DMF | 90 | 90 | 120 | 20.065 2 | 20.065 | 20.747 | R-3/m |
| MOF-107 | Cu(NO₃)₂·2.5H₂O 0.084 mmol Thiophen Dicarbonsre. 0.085 mmol | DEF | 104.8 | 97.075 | 95.20 6 | 11.032 | 18.067 | 18.452 | P-1 |
| MOF-108 | Cu(NO3)2·2.5H2O 0.084 mmol Thiophen Dicarbonsre. 0.085 mmol | DBF/ Methanol | 90 | 113.63 | 90 | 15.474 7 | 14.514 | 14.032 | C2/c |
| MOF-102 | Cu(NO3)2·2.5H2O 0.084 mmol H2(BDCCI2) 0.085 mmol | DMF | 91.63 | 106.24 | 112.0 1 | 9.3845 | 10.794 | 10.831 | P-1 |
| Clbdc1 | Cu(NO3)22.5H2O 0.084 mmol H2(BDCCI2) 0.085 mmol | DEF | 90 | 105.56 | 90 | 14.911 | 15.622 | 18.413 | P-1 |
| Cu(NMOP) | Cu(NO3)2·2.5H2O 0.084 mmol NBDC 0.085 mmol | DMF | 90 | 102.37 | 90 | 14.923 8 | 18.727 | 15.529 | P2(1)/m |
| Tb(BTC) | Tb(NO3)3·5H2O 0.033 mmol H3BTC 0.033 mmol | DMF | 90 | 106.02 | 90 | 18.698 6 | 11.368 | 19.721 | |
| Zn3(BTC)2 Honk | ZnCl₂ 0.033 mmol H3BTC 0.033 mmol | DMF Ethanol | 90 | 90 | 90 | 26.572 | 26.572 | 26.572 | Fm-3m |
| Zn4O(NDC) | Zn(NO3)2·4H2O 0.066 mmol 14NDC 0.066 mmol | DMF Ethanol | 90 | 90 | 90 | 41.559 4 | 18.818 | 17.574 | aba2 |
| CdTDC | Cd(NO₃)₂·4H₂O 0.014 mmol Thiophen 0.040 mmol DABCO 0.020 mmol | DMF H2O | 90 | 90 | 90 | 12.173 | 10.485 | 7.33 | Pmma |
| IRMOF-2 | Zn(NO3)2·4H2O 0.160 mmol o-Br-BDC 0.60 mmol | DEF | 90 | 90 | 90 | 25.772 | 25.772 | 25.772 | Fm-3m |
| IRMOF-3 | Zn(NO3)2·4H2O 0.20 mmol H2N-BDC 0.60 mmol | DEF Ethanol | 90 | 90 | 90 | 25.747 | 25.747 | 25.747 | Fm-3m |
| IRMOF-4 | Zn(NO3)2·4H2O 0.11 mmol [C3H7O]2-BDC 0.48 mmol | DEF | 90 | 90 | 90 | 25.849 | 25.849 | 25.849 | Fm-3m |
| IRMOF-5 | Zn(NO3)2·4H2O 0.13 mmol [C5H11O]2-BDC 0.50 mmol | DEF | 90 | 90 | 90 | 12.882 | 12.882 | 12.882 | Pm-3m |
| IRMOF-6 | Zn(NO3)2·4H2O 0.20 mmol [C2H4]-BDC 0.60 mmol | DEF | 90 | 90 | 90 | 25.842 | 25.842 | 25.842 | Fm-3m |
| IRMOF-7 | Zn(NO3)2·4H2O 0.07 mmol 1,4NDC 0.20 mmol | DEF | 90 | 90 | 90 | 12.914 | 12.914 | 12.914 | Pm-3m |
| I RMOF-8 | Zn(NO3)2·4H2O 0.55 mmol 2,6NDC 0.42 mmol | DEF | 90 | 90 | 90 | 30.092 | 30.092 | 30.092 | Fm-3m |
| IRMOF-9 | Zn(NO3)2·4H2O 0.05 mmol BPDC 0.42 mmol | DEF | 90 | 90 | 90 | 17.147 | 23.322 | 25.255 | Pnnm |
| IRMOF-10 | Zn(NO₃)₂·4H₂O 0.02 mmol BPDC 0.012 mmol | DEF | 90 | 90 | 90 | 34.281 | 34.281 | 34.281 | Fm-3m |
| IRMOF-11 | Zn(NO₃)₂·4H₂O 0.05 mmol HPDC 0.20 mmol | DEF | 90 | 90 | 90 | 24.822 | 24.822 | 56.734 | R-3m |
| IRMOF-12 | Zn(NO₃)₂·4H₂O 0.017 mmol HPDC 0.12 mmol | DEF | 90 | 90 | 90 | 34.281 | 34.281 | 34.281 | Fm-3m |
| IRMOF-13 | Zn(NO₃)₂·4H₂O 0.048 mmol PDC 0.31 mmol | DEF | 90 | 90 | 90 | 24.822 | 24.822 | 56.734 | R-3m |
| IRMOF-14 | Zn(NO₃)₂·4H₂O 0.17 mmol PDC 0.12 mmol | DEF | 90 | 90 | 90 | 34.381 | 34.381 | 34.381 | Fm-3m |
| IRMOF-15 | Zn(NO₃)₂·4H₂O 0.063 mmol TPDC 0.025 mmol | DEF | 90 | 90 | 90 | 21.459 | 21.459 | 21.459 | Im-3m |
| IRMOF-16 | Zn(NO₃)₂·4H₂O 0.0126 mmol TPDC 0.05 mmol | DEF NMP | 90 | 90 | 90 | 21.49 | 21.49 | 21.49 | Pm-3m |

| | |
|---|---|
| ADC | Acetylenedicarbonsäure |
| NDC | Naphtalindicarbonsäure |
| BDC | Benzoldicarbonsäure |
| ATC | Adamantantetracarbonsäure |
| BTC | Benzoltricarbonsäure |
| BTB | Benzoltribenzoesäure |
| MTB | Methantetrabenzoesäure |
| ATB | Adamantantetrabenzoesäure |
| ADB | Adamantandibenzoesäure |

Weitere metallorganische Gerüstmaterialien sind MOF-2 bis 4, MOF-9, MOF-31 bis 36, MOF-39, MOF-69 bis 80, MOF103 bis 106, MOF-122, MOF-125, MOF-150, MOF-177, MOF-178, MOF-235, MOF-236, MOF-500, MOF-501, MOF-502, MOF-505, IRMOF-1, IRMOF-61, IRMOP-13, IRMOP-51, MIL-17, MIL-45, MIL-47, MIL-53, MIL-59, MIL-60, MIL-61, MIL-63, MIL-68, MIL-79, MIL-80, MIL-83, MIL-85, CPL-1 bis 2, SZL-1 welche in der Literatur beschrieben sind.

Besonders bevorzugte metallorganische Gerüstmaterialien sind MIL-53, Zn-tBuisophthalsäure, AI-BDC, MOF-5, MOF-177, MOF-505, IRMOF-8, IRMOF-11, Cu-BTC, Al-NDC, Al-AminoBDC, Cu-BDC-TEDA, Zn-BDC-TEDA, Al-BTC, Cu-BTC, Al-NDC, Mg-NDC, Al-Fumarat, Zn-2-Methylimidazolat, Zn-2-Aminoimidazolat, Cu-Biphenyldicarboxylat-TEDA, MOF-74, Cu-BPP, Sc-Terephthalat. Weiter mehr bevorzugt sind Sc-Terephthalat, AI-BDC und Al-BTC.

Weiterhin bevorzugt sind Mn-BDC, Mn-NDC, Mn-Formiat, AI-BDC, Al-Imidazoldicarboxylat, Y-Pyridindicarboxylat, Cu-BTC, Mg-NDC.

Neben der konventionellen Methode zur Herstellung der MOF, wie sie beispielsweise in US 5,648,508 beschrieben ist, können diese auch auf elektrochemischem Wege hergestellt werden. Diesbezüglich wird auf die DE-A 103 55 087 sowie WO-A 2005/049892 verwiesen. Die auf diesem Weg hergestellten metallorganischen Gerüstmaterialien weisen besonders gute Eigenschaften in Zusammenhang mit der Adsorption und Desorption von chemischen Stoffen, insbesondere von Gasen.

Unabhängig von dessen Herstellung fällt das metallorganische Gerüstmaterial in pulverförmiger bzw. kristalliner Form an. Dieses kann als solches als Sorbens alleine oder zusammen mit anderen Sorbentien oder weiteren Materialien eingesetzt werden. Vorzugsweise geschieht dies als Schüttgut. Weiterhin kann das metallorganische Gerüstmaterial in einen Formkörper umgewandelt werden. In einer bevorzugten Ausführungsform liegt das metallorganische Gerüstmaterial als Formkörper vor.

Bevorzugte Verfahren sind hierbei die Verstrangung oder Tablettierung. Bei der Formkörperherstellung können zum metallorganischen Gerüstmaterial weitere Materialien, wie beispielsweise Binder, Gleitmittel oder andere Additive hinzugesetzt werden. Ebenso ist es denkbar, dass Mischungen von Gerüstmaterial und anderen Adsorbentien beispielsweise Aktivkohle als Formkörper hergestellt werden oder getrennt Formkörper ergeben, die dann als Formkörpermischungen eingesetzt werden.

Hinsichtlich der möglichen Geometrien dieser Formkörper existieren im Wesentlichen keine Beschränkungen. Beispielsweise sind unter anderem Pellets wie beispielsweise scheibenförmige Pellets, Pillen, Kugeln, Granulat, Extrudate wie beispielsweise Stränge, Waben, Gitter oder Hohlkörper zu nennen.

Vorzugsweise liegt das metallorganische Gerüstmaterial als Formkörper vor. Bevorzugte Ausgestaltungen sind Tabletten sowie strangförmige Extrudate. Die Formkörper erstrecken sich vorzugsweise in mindestens eine Dimension des Raumes im Bereich von 0,2 mm bis 30 mm, weiter bevorzugt von 0,5 mm bis 5 mm, insbesondere von 1 mm bis 3 mm.

Zur Herstellung dieser Formkörper sind grundsätzlich sämtliche geeigneten Verfahren möglich. Es sind insbesondere folgende Verfahrensführungen bevorzugt:
- Kneten des Gerüstmaterials allein oder zusammen mit mindestens einem Bindemittel und/oder mindestens einem Anteigungsmittel und/oder mindestens einer Templatverbindung unter Erhalt eines Gemisches; Verformen des erhaltenen Gemisches mittels mindestens einer geeigneten Methode wie beispielsweise Extrudieren; optional Waschen und/oder Trocknen und/oder Calcinieren des Extrudates; optional Konfektionieren.
- Aufbringen des Gerüstmaterials auf mindestens ein gegebenenfalls poröses Trägermaterial. Das erhaltene Material kann dann gemäß der vorstehend beschriebenen Methode zu einem Formkörper weiterverarbeitet werden.
- Aufbringen des Gerüstmaterials auf mindestens ein gegebenenfalls poröses Substrat.

Kneten und Verformen kann gemäß jedes geeigneten Verfahrens erfolgen, wie beispielsweise in Ullmanns Enzyklopädie der Technischen Chemie, 4. Auflage, Band 2, S. 313 ff. (1972) beschrieben, deren diesbezüglicher Inhalt durch Bezugnahme in den Kontext der vorliegenden Anmeldung vollumfänglich einbezogen wird.

Beispielsweise bevorzugt kann das Kneten und/oder Verformen mittels einer Kolbenpresse, Walzenpresse in Anwesenheit oder Abwesenheit mindestens eines Bindermaterials, Compoundieren, Pelletieren, Tablettieren, Extrudieren, Co-Extrudieren, Verschäumen, Verspinnen, Beschichten, Granulieren, bevorzugt Sprühgranulieren, Versprühen, Sprühtrocknen oder einer Kombination aus zwei oder mehr dieser Methoden erfolgen.

Ganz besonders werden Pellets und/oder Tabletten hergestellt.

Das Kneten und/oder Verformen kann bei erhöhten Temperaturen wie beispielsweise im Bereich von Raumtemperatur bis 300°C und/oder bei erhöhtem Druck wie beispielsweise im Bereich von Normaldruck bis hin zu einigen hundert bar und/oder in einer Schutzgasatmosphäre wie beispielsweise in Anwesenheit mindestens eines Edelgases, Stickstoff oder einem Gemisch aus zwei oder mehr davon erfolgen.

Das Kneten und/oder Verformen wird gemäß einer weiteren Ausführungsform unter Zugabe mindestens eines Bindemittels durchgeführt, wobei als Bindemittel grundsätzlich jede chemische Verbindung eingesetzt werden kann, die die zum Kneten und/oder Verformen gewünschte Viskosität der zu verknetenden und/oder verformenden Masse gewährleistet. Demgemäß können Bindemittel im Sinne der vorliegenden Erfindung sowohl Viskositätserhöhende als auch Viskositätserniedrigende Verbindungen sein.

Als unter anderem bevorzugte Bindemittel sind beispielsweise Aluminiumoxid oder Aluminiumoxid enthaltende Binder, wie sie beispielsweise in der WO 94/29408 beschrieben sind, Siliciumdioxid, wie es beispielsweise in der EP 0 592 050 A1 beschrieben ist, Mischungen ais Siliciumdioxid und Aluminiumoxid, wie sie beispielsweise in der WO 94/13584 beschrieben sind, Tonminerale, wie sie beispielsweise in der JP 03-037156 A beschrieben sind, beispielsweise Montmorillonit, Kaolin, Bentonit, Hallosit, Dickit, Nacrit und Anauxit, Alkoxysilane, wie sie beispielsweise in der EP 0 102 544 B1 beschrieben sind, beispielsweise Tetraalkoxysilane wie beispielsweise Tetramethoxysilan, Tetraethoxysilan, Tetrapropoxysilan, Tetrabutoxysilan, oder beispielsweise Trialkoxysilane wie beispielsweise Trimethoxysilan, Triethoxysilan, Tripropoxysilan, Tributoxysilan, Alkoxytitanate, beispielsweise Tetraalkoxytitanate wie beispielsweise Tetramethoxytitanat, Tetraethoxytitanat, Tetrapropoxytitanat, Tetrabutoxytitanat, oder beispielsweise Trialkoxytitanate wie beispielsweise Trimethoxytitanat, Triethoxytitanat, Tripropoxytitanat, Tributoxytitanat, Alkoxyzirkonate, beispielsweise Tetraalkoxyzirkonate wie beispielsweise Tetramethoxyzirkonat, Tetraethoxyzirkonat, Tetrapropoxyzirkonat, Tetrabutoxyzirkonat, oder beispielsweise Trialkoxyzirkonate wie beispielsweise Trimethoxyzirkonat, Triethoxyzirkonat, Tripropoxyzirkonat, Tributoxyzirkonat, Silikasole, amphiphile Substanzen und/oder Graphite zu nennen. Insbesondere bevorzugt ist Graphit.

Als viskositätssteigernde Verbindung kann beispielsweise auch, gegebenenfalls zusätzlich zu den oben genannten Verbindungen, eine organische Verbindung und/oder ein hydrophiles Polymer wie beispielsweise Cellulose oder ein Cellulosederivat wie beispielsweise Methylcellulose und/oder ein Polyacrylat und/oder ein Polymethacrylat und/oder ein Polyvinylalkohol und/oder ein Polyvinylpyrrolidon und/oder ein Polyisobuten und/oder ein Polytetrahydrofuran eingesetzt werden.

Als Anteigungsmittel kann unter anderem bevorzugt Wasser oder mindestens ein Alkohol wie beispielsweise ein Monoalkohol mit 1 bis 4C-Atomen wie beispielsweise Methanol, Ethanol, n-Propanol, iso-Propanol, 1-Butanol, 2-Butanol, 2-Methyl-1-propanol oder 2-Methyl-2-propanol oder ein Gemisch aus Wasser und mindestens einem der genannten Alkohole oder ein mehrwertiger Alkohol wie beispielsweise ein Glykol, bevorzugt ein wassermischbarer mehrwertiger Alkohol, allein oder als Gemisch mit Wasser und/oder mindestens einem der genannten einwertigen Alkohole eingesetzt werden.

Weitere Additive, die zum Kneten und/oder Verformen eingesetzt werden können, sind unter anderem Amine oder Aminderivate wie beispielsweise Tetraalkylammonium-Verbindungen oder Aminoalkohole und Carbonat enthaltende Verbindungen wie etwa Calciumcarbonat. Solche weiteren Additive sind etwa in der EP 0 389 041 A1, der EP 0 200 260 A1 oder der WO 95/19222 beschrieben.

Die Reihenfolge der Additive wie Templatverbindung, Binder, Anteigungsmittel, viskositätssteigernde Substanz beim Verformen und Kneten ist grundsätzlich nicht kritisch.

Gemäß einer weiteren bevorzugten Ausführungsform wird der gemäß Kneten und/oder Verformen erhaltene Formkörper mindestens einer Trocknung unterzogen, die im Allgemeinen bei einer Temperatur im Bereich von 25 bis 300°C, bevorzugt im Bereich von 50 bis 300°C und besonders bevorzugt im Bereich von 100 bis 300°C durchgeführt wird. Ebenso ist es möglich, im Vakuum oder unter Schutzgasatmosphäre oder durch Sprühtrocknung zu trocknen.

Gemäß einer besonders bevorzugten Ausführungsform wird im Rahmen dieses Trocknungsvorgangs mindestens eine der als Additive zugesetzten Verbindungen zumindest teilweise aus dem Formkörper entfernt.

Neben dem porösen metallorganischen Gerüstmaterial oder einer Mischung von porösen metallorganischen Gerüstmaterialien kann das Sorptionsmittel auch weitere Sorbentien aufweisen, die keine porösen metallorganischen Gerüstmaterialien sind.

Es besteht somit die Möglichkeit, dass das Sorptionsmittel ausschließlich aus porösen metallorganischen Gerüstmaterialien, also mindestens einem porösen metallorganischen Gerüstmaterial, gebildet wird.

Weiterhin kann die erfindungsgemäße Vakuumisolationseinheit ein Sorptionsmittel aufweisen, das mindestens ein weiteres Sorbens enthält, das kein poröses metallorganisches Gerüstmaterial ist.

Dementsprechend kann das Sorptionsmittel ein weiteres Sorbens oder eine Mischung weiterer verschiedener Sorbentien, also mindestens 2, 3, 4, 5, 6, 7 oder 8 solcher Sorbentien aufweisen, die kein poröses metallorganisches Gerüstmaterial darstellen.

Beispiele für mindestens ein weiteres Sorbens ist Aktivkohle bzw. Graphit, ein Molekularsieb, ein Zeolith, ein Alkalioxid, ein Erdalkalioxid, ein Alkalihydroxid, ein Erdalkalihydroxid, ein Alkalicarbonat, ein Erdalkalicarbonat, ein Alkalisulfat, ein Erdalkalisulfat oder ein bei Raumtemperatur zur Metallhydridbildung befähigtes Metall sein.

Das erfindungsgemäße Adsorptions-Kälte/Wärmemodul kann Teil einer Kälte- und/oder Wärmemaschine sein. Wie bereits oben ausgeführt wurde, wird durch das Anwendungsgebiet bestimmt, ob das Abkühlen, das Erwärmen oder sowohl das Abkühlen als auch das Erwärmen im Vordergrund stehen. Im Rahmen der vorliegenden Erfindung soll sowohl das Abkühlen als auch das Erwärmen sowie eine Kombination beider im Vordergrund stehen können. Insbesondere können Kühlprozesse vorteilhaft sein.

Das erfindungsgemäße Adsorptions-Kälte/Wärmemodul kann jedoch auch Teil eines Flüssigkeitsbehälters sein. Hierbei kann es sich bei dem Flüssigkeitsbehälter um eine Verpackung, Umverpackung, eine Flasche, eine Dose, ein Fass oder dergleichen handeln. Bei der Flüssigkeit kann es sich um ein Getränk oder andere Flüssigkeiten handeln.
Das erfindungsgemäße Adsorptions-Kälte/Wärmemodul kann ebenfalls Teil eines Raumklimasystems sein. Ein solches Raumklimasystem kann in Form eines einzelnen Gerätes, in Form mehrerer Geräte, die isoliert oder als Klimaanlage fungieren, eingesetzt werden.

Ein weiterer Gegenstand der vorliegenden Erfindung ist die Verwendung eines erfindungsgemäßen Adsorptions-Kälte/Wärmemoduls zum Kühlen und/oder Erwärmen.

Das erfindungsgemäße Adsorptions-Kälte/Wärmemodul zeichnet sich insbesondere durch die Verwendung eines porösen metallorganischen Gerüstmaterials als Teil eines Sorptionsmittels aus.

Dementsprechend ist ein weiterer Gegenstand der vorliegenden Erfindung die Verwendung eines festen Sorptionsmittels in einem erfindungsgemäßen Adsorptions-Kälte/Wärmemodul, wobei das Sorptionsmittel mindestens ein poröses und ein metallorganisches Gerüstmaterial enthaltend mindestens eine und mindestens ein Metallion koordinativ gebundene, mindestens zweizähnige organische Verbindung enthält.

### Beispiele

### Beispiel 1: Herstellung eines Aluminiumfumarat basierten metallorganischen Gerüstmaterials

17,91 g AlCl₃*6H₂O und 9,04 g Fumarsäure werden in einem Glaskolben in 550 ml DMF suspendiert und 17 h unter Rückfluss (130°C) gerührt. Der entstandene Feststoff wird abfiltriert und mit 3 x 100 ml Aceton und 2 x 100 ml Methanol gewaschen.

Anschließend wird die Substanz im Vakuumtrockenschrank bei 100°C 16 h getrocknet. Es werden 11,4 g eines farblosen Produkts erhalten. Die N₂-Oberfläche wird mit 1155 m²/g (Langmuir) bestimmt.

### Beispiel 2 Herstellung eines Magnesiumformiat-basierten metallorganischen Gerüstmaterials

| | | | |
|---|---|---|---|
| 1) | Magnesiumnitrat*6Wasser | 38,5 mmol | 9,90g |
| 2) | Ameisensäure | 106,5 mmol | 4,8g |
| 3) | DMF | 2,19 mol | 160,0g |

Es wird Magnesiumnitrat in DMF in einem Autoklavenbecher aufgelöst. Dazu gibt man Ameisensäure und rührt die Lösung für 10 min. (pH=3,49)
Kristallisation: 125°C/78h
Ausbau: Klare Lösung mit weißen Kristallen
Aufarbeitung: Die Kristalle werden abfiltriert, 2-mal mit 50 ml DMF gewaschen.
Auswaage: 5,162g
Feststoffgehalt: Auswaage: 2,9% Feststoff

### Beispiel 3: Dynamische Differenz Kalorimetrie gem. DIN 51007 und DIN 51006

Die Proben werden für 24 h bei 120°C im Hochvakuum (bis 0,0050 mbar) getrocknet. Dann werden die Pulver auf Petrischalen verteilt und in einen Exsikkator gestellt. Dort herrscht eine Luftfeuchtigkeit von ca. 70%. Die Proben werden für 120 h in dieser Atmosphäre belassen. Anschließend erfolgt die DDK-Messung.

Die Messung von abgegebener/aufgenommener Wärmemenge erfolgt jeweils mit einer Probe der metallorganischen Gerüstmaterialien nach Beispiel 1 (MOF-1) und 2 (MOF-2). Hierzu werden 26,480 mg MOF-1 und 30,490 mg MOF-2 unter Luftatmosphäre gehalten. Der Temperaturbereich beträgt 20°C bis 200°C. Die Steigerungsrate beträgt 1 K/Min.

Es wird ein Masseverlust von 20,9 % für MOF-1 und 23,3 % für MOF-2 an Wasser ermittelt. Es ergibt sich eine Enthalpie von 385 J/g für MOF-1 und 560 J/g für MOF-2. Es zeigt sich ein Maximum bei einer Temperatur von ca. 55 °C für MOF-1 und 139 °C für MOF-2.

## Patentansprüche

1. Adsorptions-Kälte/Wärmemodul enthaltend ein festes Sorptionsmittel sowie ein Arbeitsmittel, wobei das Sorptionsmittel mindestens ein poröses metallorganisches Gerüstmaterial enthaltend mindestens eine an mindestens ein Metallion koordinativ gebundene, mindestens zweizähnige organische Verbindung enthält, **dadurch gekennzeichnet, dass** das Arbeitsmittel Wasser enthält.

2. Adsorptions-Kälte/Wärmemodul nach Anspruch 1, **dadurch gekennzeichnet, dass** das mindestens eine poröse metallorganische Gerüstmaterial als Formkörper vorliegt.

3. Adsorptions-Kälte/Wärmemodul nach Anspruch 1 oder 2, **dadurch gekennzeichnet, dass** das mindestens eine Metallion ein Ion ausgewählt aus der Gruppe der Metalle bestehend aus Mg, Al, Y, Sc, Zr, Ti, V, Cr, Mo, Fe, Co, Cu, Ni, Mn, Zn und Lanthaniden ist.

4. Adsorptions-Kälte/Wärmemodul nach einem der Ansprüche 1 bis 3, **dadurch gekennzeichnet, dass** sich die mindestens eine mindestens zweizähnige organische Verbindung von Ameisensäure, Essigsäure oder einer Di-, Tri- oder Tetracarbonsäure ableitet.

5. Kälte- und/oder Wärmemaschine enthaltend ein Adsorptions-Kälte/Wärmemodul nach einem der Ansprüche 1 bis 4.

6. Flüssigkeitsbehälter enthaltend ein Adsorptions-Kälte/Wärmemodul nach einem der Ansprüche 1 bis 4.

7. Raumklimasystem enthaltend ein Adsorptions-Kälte/Wärmemodul nach einem der Ansprüche 1 bis 4.

8. Verwendung eines Adsorptions-Kälte/Wärmemodul nach einem der Ansprüche 1 bis 4 zum Kühlen und/oder Erwärmen.

9. Verwendung eines festen Sorptionsmittels in einem Adsorptions-Kälte/Wärmemodul nach einem der Ansprüche 1 bis 4, wobei das Sorptionsmittel mindestens ein poröses metallorganisches Gerüstmaterial enthaltend mindestens eine an mindestens ein Metallion koordinativ gebundene, mindestens zweizähnige organische Verbindung enthält.

## Claims

1. An adsorption refrigeration/heating module comprising a solid sorption medium and a working medium, where the sorption medium comprises at least one porous metal-organic framework comprising at least one at least bidentate organic compound coordinated to at least one metal ion, wherein the working medium comprises water.

2. The adsorption refrigeration/heating module according to claim 1, wherein the at least one porous metal-organic framework is present as shaped bodies.

3. The adsorption refrigeration/heating module according to claim 1 or 2, wherein the at least one metal ion is an ion selected from the group of metals consisting of Mg, Al, Y, Sc, Zr, Ti, V, Cr, Mo, Fe, Co, Cu, Ni, Mn, Zn and lanthanides.

4. The adsorption refrigeration/heating module according to any of claims 1 to 3, wherein the at least one at least bidentate organic compound is derived from formic acid, acetic acid or a dicarboxylic, tricarboxylic or tetracarboxylic acid.

5. A refrigeration and/or heating machine comprising an adsorption refrigeration/heating module according to any of claims 1 to 4.

6. A container for liquids which comprises an adsorption refrigeration/heating module according to any of claims 1 to 4.

7. An air conditioning system comprising an adsorption refrigeration/heating module according to any of claims 1 to 4.

8. The use of an adsorption refrigeration/heating module according to any of claims 1 to 4 for cooling and/or heating.

9. The use of a solid sorption medium in an adsorption refrigeration/heating module according to any of claims 1 to 4, where the sorption medium comprises at least one porous metal-organic framework comprising at least one at least bidentate organic compound coordinated to at least one metal ion.

## Revendications

1. Module de froid/chaleur à adsorption contenant un sorbant solide ainsi qu'un fluide de travail, le sorbant contenant au moins un matériau support organométallique poreux, contenant au moins un composé organique au moins bidentate lié par coordination à au moins un ion métallique, **caractérisé en ce que** le fluide de travail contient de l'eau.

2. Module de froid/chaleur à adsorption selon la revendication 1, **caractérisé en ce que** ledit au moins un matériau support organométallique poreux se trouve sous forme de corps façonné.

3. Module de froid/chaleur à adsorption selon la revendication 1 ou 2, **caractérisé en ce que** ledit au moins un ion métallique est un ion choisi dans le groupe des métaux constitué par Mg, Al, Y, Sc, Zr, Ti, V, Cr, Mo, Fe, Co, Cu, Ni, Mn, Zn et les lanthanides.

4. Module de froid/chaleur à adsorption selon l'une quelconque des revendications 1 à 3, **caractérisé en ce que** ledit au moins un composé organique au moins bidentate est dérivé de l'acide formique, de l'acide acétique ou d'un acide dicarboxylique, tricarboxylique ou tétracarboxylique.

5. Machine de froid et/ou de chaleur contenant un module de froid/chaleur à adsorption selon l'une quelconque des revendications 1 à 4.

6. Récipient à liquide contenant un module de froid/chaleur à adsorption selon l'une quelconque des revendications 1 à 4.

7. Système de climatisation contenant un module de froid/chaleur à adsorption selon l'une quelconque des revendications 1 à 4.

8. Utilisation d'un module de froid/chaleur à adsorption selon l'une quelconque des revendications 1 à 4 pour le refroidissement et/ou le chauffage.

9. Utilisation d'un sorbant solide dans un module de froid/chaleur à adsorption selon l'une quelconque des revendications 1 à 4, le sorbant contenant au moins un matériau support organométallique poreux, contenant au moins un composé organique au moins bidentate lié par coordination à au moins un ion métallique.
